# EUROPEAN PATENT APPLICATION

(11) **EP 4 492 017 A1**
(43) Date of publication of application: **15.01.2025**
(21) Application number: 23382717.9
(22) Date of filing: 13.07.2023
(51) Int. Cl.: G01F 11/02, B05B 11/00, B05B 11/02, B65D 83/00, G01F 11/04

(54) **A METHOD AND A SYSTEM FOR DISPENSING A DOSE OF A LIQUID OR PASTY PRODUCT OCCUPYING A STORAGE ENCLOSURE OF VARIABLE VOLUME IN A CONTAINER**

(71) Applicant: Brill Engines, S.L., 08022 Barcelona (ES)
(72) Inventor: BUISAN FERRER, Josep, 08006 BARCELONA (ES); NIETO CAVIA, Laura, 08027 BARCELONA (ES); BATLLE GRAU, Bàrbara, 17130 L'ESCALA (ES)
(74) Representative: ABG Intellectual Property Law, S.L.

(57) **Abstract**

The present invention relates to a method for dispensing a dose (3b) of a liquid or pasty product (3) which occupies a storage enclosure (30) of variable volume in a container (2) and is subjected to a pressure greater than atmospheric pressure as a result of elastic means (20) which, when elastically loaded, tend to compress the mentioned storage enclosure (30), the method comprising the step of restoring the load of the elastic means (20), compensating for or preventing a distension thereof caused by the dispensing of a dose (3a) of the product (3) extracted from the storage enclosure (30), by means of the temporary establishment of pressure conditions Pv lower than atmospheric pressure in a pressure chamber (40) which is a chamber of variable volume linked to, or under the influence of, the elastic means (20).

## Description

### Technical field of the invention

The invention relates to a method for dispensing a dose of a liquid or pasty product, such as an ophthalmological product, occupying a storage enclosure of variable volume in a container. The invention can be carried out into practice in a system of the type which uses a principle similar to that of an airless dispensing pump.

### Background of the invention

Systems for dispensing liquids by means of an airless pump are well known and particularly suitable for dispensing pharmaceutical or cosmetic compositions that are stored in a container without contact with the outside air, preserving their active properties and guaranteeing their stability for a longer period of time.

In dispensers of this type, the product to be dispensed occupies a storage enclosure of variable volume on which a volume-compensating plunger acts, with atmospheric pressure acting on one of the sides thereof. The dispensers are equipped with a head that can be externally actuated in order to actuate a pumping mechanism capable of suctioning a dose of the product stored in the enclosure of variable volume and enable a communication path between an aspiration chamber which temporarily contains the aspirated dose with the outside. Variation in the volume of the storage enclosure is compensated for by the volume-compensating plunger which is displaced automatically when a volume of air is not taken into the storage enclosure to replace the volume of aspirated and dispensed product.

To further increase the performance of dispensers of this type in terms of product preservation, and to insulate it from the outside, dispensers particularly equipped with means to prevent the entry of external contaminants into the storage enclosure or the contact of external contaminants with volumes of the product that may remain in the communication path with the outside, including intermediate chambers, if any, are known.

Patent document ES 2200573 describes a system with a plurality of valves which prevent an undesired return of a volume of the product to parts of the system which are to be kept contact free with the outside when a dispensing operation ends.

Patent document ES 2256608 describes a system which complements this plurality of valves with materials and treatments that repel germs.

Patent document EP 3082707 proposes an airless pump-type dispenser which incorporates a special filter in an outlet valve.

An alternative measure which, nevertheless, can also be combined with the preceding ones, consists of taking precautions so that the product occupying the storage enclosure is permanently under positive pressure conditions, understood as being greater than atmospheric pressure. This measure would prevent the entry of any external agent into the storage enclosure.

This measure would provide added advantages such as a more controlled dispensing of a dose in certain circumstances.

An objective of the present invention relates to a method and a system which allow achieving these objectives.

Taking measures so that the product occupying the storage enclosure is permanently under positive pressure conditions may require the intervention of elastically loaded elastic means that tend to compress the storage enclosure. However, this solution presents some obstacles that have yet to be satisfactorily resolved. The main obstacle is to prevent the undesired distention of these elastic means as the product is discharged and dispensed, and the volume of the storage enclosure is reduced accordingly.

Other objectives of the invention relate to a method and a system which allow achieving the objectives identified above in a manner which is reliable and easily practicable by a user. In this sense, it is of interest a system that can implement the invention in a robust manner, that does not require constructive complexity which prevents its commercialization due to cost problems, and that does not require more complicated operation of the system, for example, that does not require more actuators or having to complete several steps or to actuate several elements to that end.

Patent document EP 3171921 proposes a dispenser for administering a drug that must be inhaled which, during the use thereof, can cause negative pressures in a storage enclosure for storing the drug in liquid state, which can lead to the undesired formation of vapor and gas bubbles, particularly when the liquid contains ethanol-based solutions. The device has a mechanism for increasing the pressure on the liquid content during use, that is, during the discharge of a dose using an air spring which pushes a piston, with an air filtration path and a check valve, which must be loaded by means of assembling the dispenser every time it is to be used.

Patent document EP 2599558 also proposes an airless pump-type dispenser for dispensing a liquid equipped with elastic means, in the form of a spring linked to a mobile plunger, that subject the product to a positive pressure, the purpose of which is, however, to prevent the breakage of the storage enclosure if the product expands due to changes in temperature or state.

Similarly, patent document EP 2881338 proposes the use of elastic support elements located in a part of the volume-compensating plunger of an airless pump-type dispenser, the purpose of which is to dampen the impact an external blow, which the dispenser may experience, on the storage enclosure.

### Description of the invention

A method according to claim 1 is proposed.

This is a method suitable for dispensing a dose of a liquid or pasty product which occupies a storage enclosure of variable volume in a container and is subjected to a pressure greater than atmospheric pressure as a result of elastic means which, when elastically loaded, tend to compress the mentioned storage enclosure.

Essentially, the method is characterized in that it comprises the step of restoring the load of the elastic means, compensating for or preventing a distension thereof caused by the dispensing of a dose of the product extracted from the storage enclosure, by means of the temporary establishment of pressure conditions Pv lower than atmospheric pressure in a pressure chamber which is a chamber of variable volume linked to, or under the influence of, the elastic means.

It should be understood that the term "comprises" and variations thereof such as "comprising" imply the inclusion of a mentioned step, operation, element or elements, but not the exclusion of any other step, operation, element or elements unless expressly indicated.

In a preferred variant, the method of the invention comprises the temporary establishment of pressure conditions Pv lower than atmospheric pressure that are sufficient to prevent the mentioned pressure chamber from being able to expand, even when the elastic means tend to expand it; or that are sufficient to shrink the pressure chamber, even when the elastic means tend to expand it. These options give rise to respective variants of dispensing systems suitable for putting into practice the claimed method.

It is envisaged that, in order to put the invention into practice, a user should not have to add steps or operations to those which are normally performed in order to dispense a dose of a product from a container.

Specifically, in a variant of the method, the dispensing of a dose of a product comprises acting externally on, for example, maneuvering, a mobile component of a dispensing system, i.e., an actuator, and displacing it in a first direction from a standby position to a position which causes the compression of the storage enclosure; and the displacement of the same mobile component in a second direction back to its standby position, either automatically or manually. In this variant, the displacement of this mobile component also automatically triggers the step of restoring the load of the elastic means.

As will be explained below, the displacement of the aforementioned mobile component to its standby position can be in fact automatic, for example, subjecting same to the action of auxiliary elastic means that tend to arrange same in its standby position. However, it is also contemplated that the displacement of the aforementioned mobile component to its standby position also requires an external actuation, for example, with a maneuver being formed thereon.

Another object of the present invention relates to a system for dispensing a dose of a liquid or pasty product occupying a storage enclosure of variable volume in a container.

This system is defined in the claims.

The proposed system is partially implemented based on the technical principle of an airless dispensing pump.

The system of the invention completes this technical principle of an airless dispensing pump with the addition of elastic means which, when elastically loaded, preferably under compression, will tend to compress the product to be dispensed contained in the storage enclosure, the system being equipped with restoring means that prevent the distension of these elastic means as the volume of the product in the storage enclosure decreases, at least to such an extent that they will continue to compress the product to be dispensed until the product runs out.

To that end, the mentioned restoring means are configured for the temporary establishment of pressure conditions Pv lower than atmospheric pressure in a pressure chamber which is a chamber of variable volume of the system linked to, or under the influence of, the elastic means.

Playing with the internal pressure of this pressure chamber, particularly when pressure conditions lower than atmospheric pressure are established, said pressure chamber will not be able to expand or will shrink even when the elastic means tend to expand it, preventing an undesired distension or compressing the elastic means. Different embodiments of the invention put into practice either phenomenon.

Accordingly, according to an embodiment of interest, the restoring means are prepared to enable establishing pressure conditions Pv lower than atmospheric pressure that are sufficient to prevent the pressure chamber from being able to expand, even when the elastic means tend to expand it; or that are sufficient to shrink the pressure chamber, even when the elastic means tend to expand it.

Preferably, the elastic means are loaded in compression.

According to one embodiment, the restoring means comprise one or a plurality of connection paths with the pressure chamber for the intake of air into the inside thereof and for the extraction of air from the inside thereof, these restoring means being able to at least adopt an operating state, in which they enable the extraction of air but prevent the intake of air or prevent both the intake and the extraction of air; and a non-operating state, in which they enable the intake of air and preferably also prevent the extraction of air.

In a variant of interest, the temporary establishment of pressure conditions Pv lower than atmospheric pressure in the pressure chamber will occur automatically as a result of actuating the typical actuator provided in the dispensing systems, in the usual form of a displaceable mobile component, for example, with a finger. That is, the same maneuver performed by the user to dispense a dose of a product will cause, during a phase of a sequence for dispensing a dose of a product, the mentioned temporary establishment of the pressure conditions Pv lower than atmospheric pressure in the pressure chamber.

Practical embodiments of the system use plungers which determine compartments in the container and in some cases also compartments outside the container, although in hydraulic connection with a compartment in the container.

For example, it is contemplated that the product fills the area of a chamber determined between two of these plungers and that the storage enclosure is therefore a chamber. In this embodiment, the elastic means would be arranged outside this chamber occupied by the product.

For example, it is also contemplated that the storage enclosure is a foldable/compressible flexible container, such as a bag or the like. If the storage enclosure is a flexible container, the elastic means can be arranged between the flexible container and a plunger, tending to compress the flexible container directly or through a thrust element. In this embodiment, the flexible container may or may not be arranged in the pressure chamber.

These options give rise to alternative variants of the system having in common the provision of a dispensing path prepared for communicating the product contained in the storage enclosure with the outside, by means of a valve group or element that can be mechanically actuated as a result of actuating the actuator or scaled to establish communication with the outside when the pressure of the product exceeds a dispensing pressure Pd, among which the claims describe some preferred embodiments.

In one variant of the system, the container is compartmentalized by several plungers, with there being an actuation plunger that can be directly or indirectly actuated by a user; a support plunger, with atmospheric pressure acting on one of the sides thereof; and a dispensing plunger, arranged between the actuation plungers and the support plunger.

Advantageously, and unlike a conventional airless pump, the system may be devoid of any aspiration chamber which temporarily houses a dose of the product extracted from the storage enclosure prior to the dispensing thereof to the outside. This is possible because the product is extracted from the storage enclosure not by aspiration but rather by an excessive pressure exerted thereon by the dispensing plunger when the actuation plunger is actuated.

In this variant of the system, the support plunger is displaceable only in the direction for approaching the dispensing plunger; the volume of the pressure chamber is determined by the separation between the actuation plunger and the dispensing plunger and the elastic means are loaded, in a compression state, between these actuation plunger and the dispensing plunger, tending to separate them and expand the pressure chamber.

In this variant of the system, the volume of the storage enclosure is determined by the separation between the dispensing plunger and the support plunger, the product being able to be contained directly between these dispensing plunger and support plunger or in a flexible container housed between these dispensing plunger and support plunger.

The communication of the storage enclosure with the outside occurs when, starting from a standby state of the system, a driven movement of the dispensing plunger to the storage enclosure occurs as a result of an actuated displacement of the actuation plunger to the mentioned storage enclosure which involves the restoring means adopting the operating state, after shrinkage of the pressure chamber and overcompression of the elastic means, all this such that when the volume of the storage enclosure decreases upon extracting a dose of the product therefrom and/or when a return displacement of the actuation plunger occurs in the opposite direction with respect to the storage enclosure and during a part of its return stroke, the adoption of the operating state of the restoring means causes, as a result of vacuum, the driven movement of the dispensing plunger preventing the pressure chamber from being able to expand and the elastic means from being able to distend, forcing the displacement of the support plunger in order to compensate for the volume of the dose of the product extracted from the storage enclosure until the restoring means adopt their non-operating state, thereby allowing the expansion of the pressure chamber returning the elastic means substantially to their original compression state.

Preferably, the actuation plunger is biased by auxiliary elastic means which tend to arrange it against a displacement stop in an opposite direction with respect to the storage enclosure. This position would correspond to the standby state of the system.

In a way for putting this variant of the system into practice, the restoring means comprise a plurality of connection paths with the pressure chamber including a path with a check valve through the actuation plunger and a sealing device prepared to enable or prevent the passage of air based on the relative position between the dispensing plunger and the actuation plunger.

The dispensing plunger can be provided along its perimeter with a wall which determines a sleeve on which the actuation plunger rests and slides.

In another way for putting this variant of the system into practice, the restoring means may comprise a connection path for connecting the pressure chamber with the outside located between the pressure plunger and the actuation plunger, with the system being in its standby state.

In another variant of the system, the container is compartmentalized by several plungers, with there being a support plunger, with atmospheric pressure acting on one of the sides thereof; and a dispensing plunger; there being an auxiliary chamber of variable volume, located on the side of the dispensing plunger opposite to the side in which the support plunger is located, connected to a piston group with a corresponding actuation plunger.

In this another variant, the system may also be devoid of any aspiration chamber which temporarily houses a dose of the product extracted from the storage enclosure prior to the dispensing thereof to the outside. This is possible because the product is extracted from the storage enclosure not by aspiration but rather by an excessive pressure exerted thereon by the dispensing plunger when the actuation plunger is actuated.

In this another variant of the system, the support plunger is displaceable only in the direction for approaching the dispensing plunger; the volume of the pressure chamber is determined by the separation between the dispensing plunger and the support plunger; and the elastic means are loaded, in a compression state, between one of the dispensing plunger or of support and the storage enclosure consisting of a flexible container located inside the pressure chamber.

The communication of the storage enclosure with the outside occurs when, starting from a standby state of the system, a driven movement of the dispensing plunger to the storage enclosure occurs caused by the hydraulic thrust brought about by an actuated displacement of the actuation plunger which involves the restoring means adopting an operating state, causing a distension of the elastic means to compensate for the volume of the dose of the product extracted from the storage enclosure, all this such that when a return displacement of the actuation plunger occurs in the direction opposite that which caused the displacement of the dispensing plunger to the storage enclosure and during a part of its return stroke, the adoption of the operating state of the restoring means causes as a result of suction the displacement of the support plunger and the compression of the elastic means, returning the elastic means substantially to their original compression state.

In still another variant of the system, the container is compartmentalized by several plungers, with there being a support plunger, with atmospheric pressure acting on one of the sides thereof; a dispensing plunger; and a separating plunger, located between the support plunger and the dispensing plunger, with there being, like in the preceding case, an auxiliary chamber of variable volume located on the side of the dispensing plunger opposite to the side in which the support plunger is located, connected to a piston group with a corresponding actuation plunger.

In this still another variant of the system, the product is extracted from the storage enclosure not by aspiration but rather by an excessive pressure exerted thereon by the dispensing plunger when the actuation plunger is actuated.

In this still another variant of the system, the support plunger is displaceable only in the direction for approaching the dispensing plunger; the volume of the pressure chamber is determined by the separation between the support plunger and the separating plunger and the elastic means are loaded, in a compression state, between these support plunger and separating plunger, tending to separate them and expand the pressure chamber; and the volume of the storage enclosure is determined by the separation between the dispensing plunger and the separating plunger, the product being able to be contained directly between these dispensing plunger and separating plunger or in a flexible container housed between these dispensing plunger and separating plunger.

The communication of the storage enclosure with the outside occurs when, starting from a standby state of the system, a driven movement of the dispensing plunger to the storage enclosure occurs caused by the hydraulic thrust brought about by an actuated displacement of the actuation plunger which involves the restoring means adopting an operating state, causing a distension of the elastic means to compensate for the volume of the dose of the product extracted from the storage enclosure, all this such that when a return displacement of the actuation plunger occurs in the direction opposite that which caused the displacement of the dispensing plunger to the storage enclosure and during a part of its return stroke, the adoption of the operating state of the restoring means causes as a result of suction the displacement of the support plunger and the compression of the elastic means, returning the elastic means substantially to their original compression state.

### Brief description of the drawings

Figure 1 shows a first main variant of a system according to the invention;
Figures 2a, 3a, 4a, 5, and 6a are a graphical simplification of another variant of the system according to the invention, conceptually similar to the first main variant, in an operating sequence;
Figure 2b is a graphical simplification of another variant of the system according to the invention, also conceptually similar to the first variant;
Figures 3b, 4b, and 6b show the state of the system of Figure 1 in respective moments of a dispensing sequence which are equivalent to the moments of Figures 3a, 4a, and 6a;
Figure 7 shows a second main variant of a system according to the invention;
Figures 8a, 9, 10, 11, and 12 are a graphical simplification of another variant of the system according to the invention, conceptually similar to the second main variant, in an operating sequence; and
Figure 8b is a graphical simplification of another variant of the system according to the invention, also conceptually similar to the second main variant.

### Detailed description of the invention

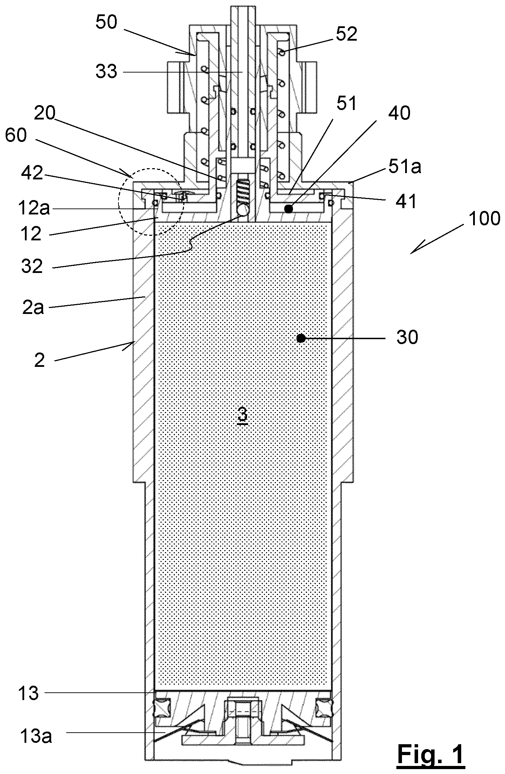

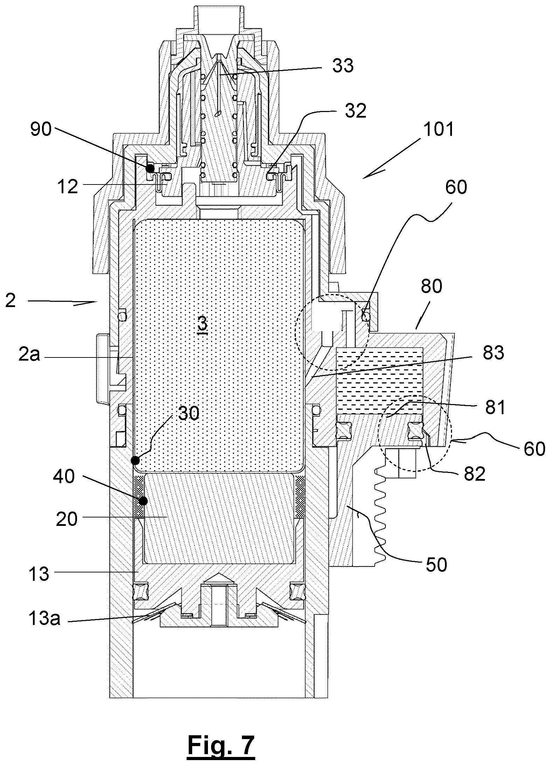

The invention is exemplified in different variants, two of which are systems 100 and 101 illustrated realistically in Figures 1 and 7, respectively.

The systems 100 and 101 have some elements in common and in this case the same reference numbers will be used to designate these common elements.

These two systems 100 and 101, and conceptually similar variants, are also schematically illustrated in other figures, to which reference will be made throughout the present description.

In systems 100 and 101, a container 2 has a sleeve 2a which mounts a set of plungers that determine a pressure chamber 40 of variable volume. This pressure chamber 40 will be used to restore the load of elastic means 20 acting under compression against a volume of a product 3 to be dispensed, contained in a storage enclosure 30 of variable volume, when the loading state of these same elastic means 20 changes upon dispensing a dose of this product 3.

In systems 100 and 101, a plunger fitted in a leak-tight manner inside the sleeve 2a can be displaced to reduce the volume of the storage enclosure 30 when the system is actuated to dispense a dose of a product 3 contained in this storage enclosure 30. This is the dispensing plunger 12.

In systems 100 and 101, another plunger fitted in a leak-tight manner inside the sleeve 2a performs the function of a volume-compensating plunger of an airless pump. This is the support plunger 13. In a manner that is known, the support plunger 13 has check means 13a which prevent its return displacement in a direction away from the dispensing plunger 12.

The check means 13a can be implemented in a known manner and are not described in greater detail since the way in which they are implemented is not essential for carrying out the invention. Only by way of non-limiting example, the check means 13a may comprise flexible perimeter flanges, arranged at an inclination with respect to the inner face of the sleeve 2a on which they rest favoring the sliding thereof by bending when the support plunger 13 moves in a first direction, in an upward direction according to the drawings, but they tend to expand or become anchored and hinder the sliding thereof when the support plunger 13 moves in a direction opposite the first direction, in a downward direction in the drawings. This is a typical configuration sometimes known as an arrowhead configuration.

In systems 100 and 101, the storage enclosure 30 contains a volume of a product 3 to be dispensed in leak-tight conditions.

Different options relating to the storage enclosure 30 are illustrated in the drawings.

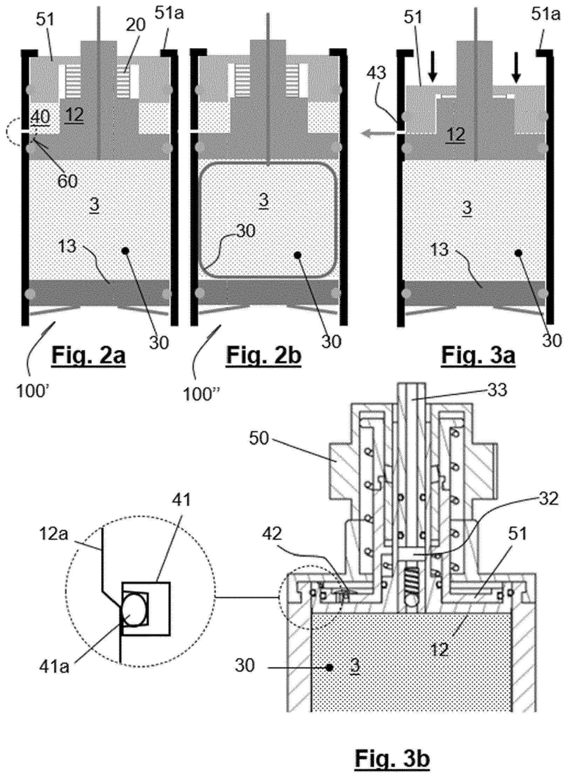

The storage enclosure 30 can be implemented, for example, directly in the form of the leak-tight chamber formed between the dispensing plunger 12 and the support plunger 13, together with the sleeve 2a of the container. This is the case of the system 100 realistically illustrated in Figure 1. This is also the case of the system 100', object of the sequence of Figures 2a, 3a, 4a, 5, and 6a.

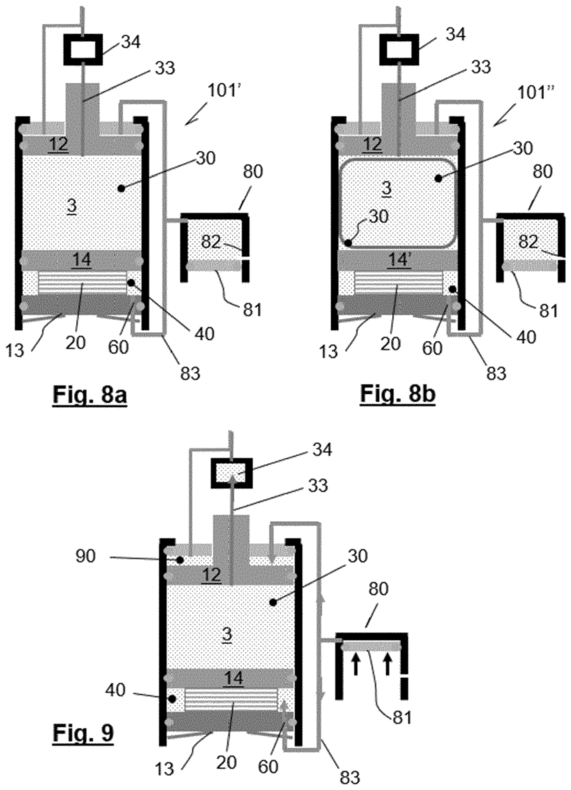

The storage enclosure 30 can also be implemented, for example, in the form of a bag placed between the dispensing plunger 12 and the support plunger 13. This is the case of the system 101 realistically illustrated in Figure 7. This is also the case of systems 100" and 101" of Figures 2b and 8b, respectively.

The system 101" of Figure 8b serves to show that a thrust element 14', depicted herein in the form similar to a plunger, can be used to better transmit the thrust of the elastic means 20 on the storage enclosure 30, represented herein by the aforementioned bag. This thrust element 14' does not require leak-tight fitting with the sleeve of the container.

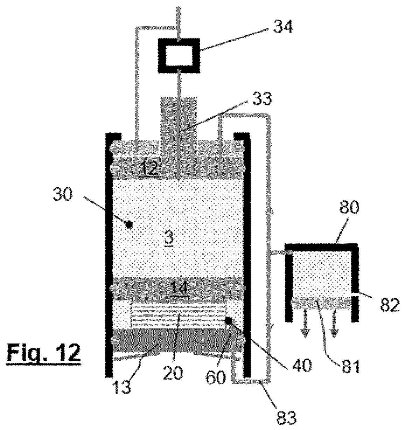

The storage enclosure 30 can also be implemented, for example, directly in the form of the leak-tight chamber formed between the dispensing plunger 12 and a separating plunger 14. This separating plunger 14, in the absence of a bag to perform the role of the storage enclosure 30, and unlike the thrust element 14' of the system 101 " of Figure 8b, will be a plunger fitted in a leak-tight manner inside the sleeve of the container. This is the case of the system 101', object of the sequence of Figures 8a and 9 to 12.

In systems 100 and 101, a dispensing path 33 is prepared for communicating the product 3 contained in the storage enclosure 30 with the outside by means of a valve group or element 32.

The valve group or element 32 can be mechanically actuated.

The valve group or element 32 can be configured such that it is scaled to establish communication with the outside when the pressure of the product 3 inside the storage enclosure 30 exceeds a dispensing pressure Pd.

In any case, in systems 100 and 101, a maneuverable actuator 50 will cause, when being actuated, the displacement of the dispensing plunger 12 in the direction towards the support plunger 13 (downward according to the drawings), triggering the actuation of the valve group or element 32 so that communication with the outside is established. As referred to above, the actuation of the valve group or element 32 can be mechanical, by means of the displacement of the maneuverable actuator 50; or by the mentioned valve group or element 32 being able to be configured such that it is scaled to establish communication with the outside when the pressure of the product 3 exceeds a dispensing pressure Pd, which will occur as a result of the displacement of the dispensing plunger 12 in the direction towards the support plunger 13. In the implementation examples, this is the option that is depicted.

It should be noted that, as exemplified by the system 100, and unlike the conventional airless dispensing pumps, suction means for suctioning a dose of a product and an aspiration chamber which temporarily accumulates the dose aspirated from the storage enclosure are dispensed with.

In the two systems 100 and 101, the compressed elastic means 20 act on the product 3 to be dispensed contained in the storage enclosure 30, subjecting said product 3 to a positive pressure accordingly.

The elastic means 20 can be inside the pressure chamber 40, in an area in fluid connection with the pressure chamber, or in an area at atmospheric pressure, but in any case subjecting the pressure chamber 40 to the influence thereof tending to change the volume of the pressure chamber 40 when they accumulate elastic load.

Different options relating to the arrangement and configuration of these elastic means 20 are illustrated in the drawings.

The two systems 100 and 101 are equipped with restoring means 60 for restoring the load of the elastic means 20 in order to prevent an undesired distension thereof, with respect to their initial loading state, caused by the dispensing of a dose of the product 3 extracted from the storage enclosure 30.

To that end, the restoring means 60 are configured for the temporary establishment of pressure conditions Pv lower than atmospheric pressure in the pressure chamber 40 which, for the case of the system 100, will be sufficient to prevent the pressure chamber 40 from being able to expand, even when the elastic means tend to expand it; and for the case of the system 101, will be sufficient to shrink the pressure chamber 40, even when the elastic means 20 tend to expand it.

In practice, the restoring means 60 allows temporarily establishing pressure conditions Pv lower than atmospheric pressure inside the pressure chamber 40 which will translate into the generation of a force of attraction Fa between the plungers forming same and which will be able to compensate for or overcome the force exerted on these same plungers, directly or indirectly, by the elastic means 20 which tend to expand same.

To that end, the restoring means 60 comprise one or a plurality of connection paths with the pressure chamber 40 for the intake of air into the inside thereof and for the extraction of air from the inside thereof, being able to adopt at least an operating state, in which they enable the extraction of air but prevent the intake of air or prevent both the intake and the extraction of air; and a non-operating state, in which they prevent the extraction of air but enable the intake of air.

Now in reference to the particular case of the system 100, the pressure chamber 40 is determined between an actuation plunger 51, the dispensing plunger 12, and the sleeve 2a of the container. The actuation plunger 51 is a plunger fitted in a leak-tight manner in a sleeve and the system 100 has an upper displacement stop 51a for this actuation plunger 51.

The appearance of the force of attraction Fa referred to above will cause coupling of the actuation plunger 51 and the dispensing plunger 12 by suction, overcoming the elastic force exerted thereon by the elastic means 20 that always tend to separate them. In the presence of the force of attraction Fa, a movement of the actuation plunger 51 towards the displacement stop 51a (upward according to the drawings) will be susceptible of causing the driven movement of the dispensing plunger 12.

Now in reference to the particular case of the system 101, the pressure chamber 40 is determined between the support plunger 13, another plunger, and the sleeve 20. This another plunger can be the dispensing plunger 12 when the storage enclosure 30 is a bag (as exemplified by systems 101 and 101" of Figures 7 and 8b, respectively); or can be a separating plunger 14 (as exemplified by the system 101' of the sequence of Figures 8a and 9 to 12).

The appearance of this force of attraction Fa in the system 101 will cause the support plunger 13 to approach the dispensing plunger 12 or the separating plunger 14, as the case may be, by suction, overcoming the elastic force that are exerted thereon by the elastic means 20 that always tend to separate them. In the presence of the force of attraction Fa, the support plunger 13 can be seen driven to the dispensing plunger 12 or the separating plunger 14, as the case may be (that is, in an upward direction according to the drawings).

Next, the system 100 of Figure 1 is described in greater detail to then explain its operating principle, with the help of the sequence of Figures 2a, 3a, 4a, 5, and 6a which illustrate the system 100', conceptually similar to the system 100.

It is particular to the system 100 that the actuation plunger 51 is biased by auxiliary elastic means 52, which tend to arrange it against the upper displacement stop 51a. In the example, these auxiliary elastic means 52 are implemented by a return spring.

In the system 100, the valve group or element 32 is a valve which mounts a spheroid sealing part biased by a spring against a seat provided to that end in the dispensing path 33. However, other solutions are possible without altering the spirit of the invention.

In the system 100, to coordinate the intake and extraction of air with respect to the pressure chamber 40, the restoring means 60 comprise a sealing device 41 and check valve means 42. For the exemplary case, the actuation plunger 51 is fitted or plugged in the dispensing plunger 12. Specifically, the dispensing plunger 12 is provided along its perimeter with a wall 12a projecting towards the upper displacement stop 51a and determining, with its central portion, a housing for the actuation plunger 51. In practice, this wall 12a works as the sleeve on which the actuation plunger 51 rests and slides. The sealing device 41 is a non-leak-tight device which allows the passage of air based on the relative position adopted by the actuation plunger 51 and the dispensing plunger 12 with respect to one another.

In the system 100', the restoring means 60 comprise a connection 43 of the pressure chamber 40 with the outside, said connection 43 being enabled according to the instantaneous position adopted by the actuation plunger 51 and the dispensing plunger 12.

In the system 100, the elastic means 20 are implemented by a spring which rests against both the actuation plunger 51 and the dispensing plunger 12. In one embodiment, the spring is made of stainless steel, has a constant K=0.9 N/mm, subjecting the product 3 to a positive pressure of about 0.06 bar above the atmospheric pressure, the system being sized so that the container can accommodate a volume of the product 3, only by way of example, of between 50 ml and 500 ml.

The system 100 is particularly suitable for dispensing products in cream, lotion, or gel format.

The operation of the system 100 is explained below with the help of the sequence of Figures 2, 3a, 4a, 5, and 6a of the system 100' and sometimes also of Figures 3b, 4b, and 6b which show the realistic version of the system 100 of Figure 1. In the following explanation and also in any mention made above, the terms such as "up", "upward", "upper", "down", "downward", "lower", or the like refer to the specific orientation of the drawings.

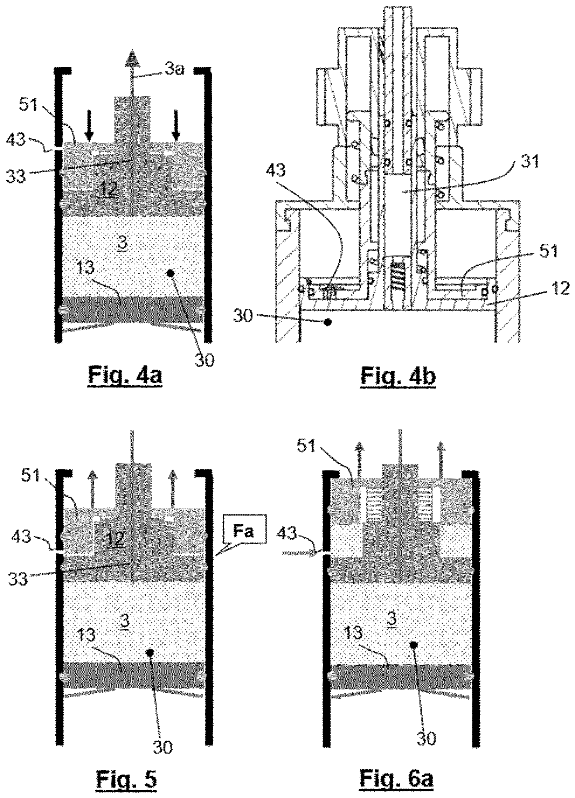

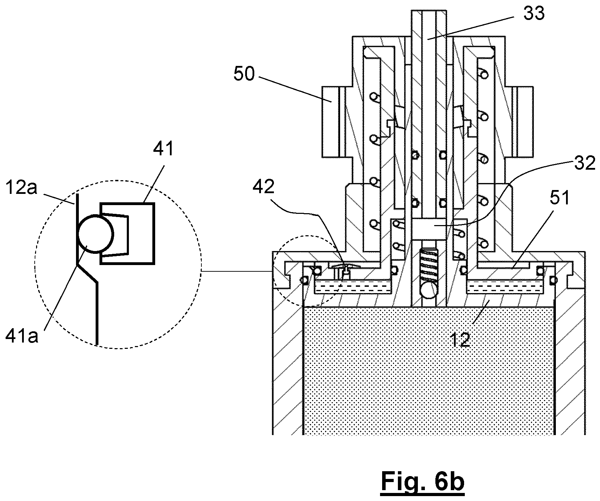

The operation of systems 100; 100'; 100" is explained below.
- With the system 100 adopting the standby position of Figure 1, which is equivalent to the standby position of systems 100' and 100" in Figures 2a and 2b, respectively, the elastic means 20 are in a predetermined compression state, tending to expand the pressure chamber 40.
   With the upward movement of the actuation plunger 51 being prevented as a result of contact with the upper displacement stop 51a, the elastic means 20 push the dispensing plunger 12 against the storage enclosure 30, pressing the product 3 contained therein as the downward movement of the support plunger 13 is prevented.
- To dispense a dose of a product 3, the actuator 50 (see Figure 1) is displaced, in this case integral with the actuation plunger 51, in a downward direction.
   In a first displacement phase, as illustrated in Figures 3a and 3b, the elastic means 20 are compressed and the pressure chamber 40 is emptied of air.
   In the system 100', this occurs through the connection 43 with the outside.
   In the system 100, this occurs through a check valve 42. Specifically, Figure 3b shows an enlarged detail of the sealing device 41. For this case, the latter has complementary coupling means comprising a reduced section in the wall 12a of the dispensing plunger 12 that causes the flattening of a compressible ring 41a housed at the edge of the actuation plunger 51. In the situation shown in Figure 3b, the compressible ring prevents the entry of air into the pressure chamber 40; and the air is discharged from the pressure chamber 40 through the check valve 42.
   In this first displacement phase, the elastic means 20 absorb substantially the displacement of the actuation plunger 51, increasing the load thereof under compression.
   In a second displacement phase, as illustrated in Figures 4a and 4b, the continuous displacement of the actuation plunger 51 in the downward direction causes, through mechanical thrust, the driven movement and displacement of the dispensing plunger 12. The thrust of the dispensing plunger 12 causes an increase in the pressure of the product 3 contained in the storage enclosure 30, opening the valve 32 (see Figure 1) placed in the dispensing path 33 when the pressure of the product 3 exceeds the dispensing pressure Pd.
   It should be indicated that, in the system 100', the entire pressure chamber 40 is displaced in the downward direction and the connection 43 no longer communicates with the pressure chamber 40. From this moment, the restoring means 60 adopt an operating state.
   Figure 4b serves to show, in the system 100 of Figure 1, the moment represented by the simplification of Figure 4a. The flattening of the compressible ring 41a continues, thus preventing the intake of air into the pressure chamber 40, and the restoring means 60 continue to adopt an operating state which is initiated in this case during the first displacement phase.
- The opening of the valve 32 placed in the dispensing path 33 will cause the exit of a dose 3a of the product 3 contained in the storage enclosure 30 until the pressure of the product 3 contained in the storage enclosure 30 no longer exceed the dispensing pressure Pd. In the example, this circumstance can take place when pressure is no longer exerted on the actuation plunger 51 or when the downward movement thereof is interrupted, providing to that end, for example, a displacement stop (not depicted).
   Since no pressure is exerted on the actuation plunger 51, it will tend to adopt by default its initial position biased by the auxiliary elastic means 52.
   In a first return phase, illustrated in Figure 5, the restoring means 60 adopt the operating position, preventing the intake of air into the pressure chamber 40, and as a result of vacuum, or as if it were a suction cup, the actuation plunger 51, as it displaces upward, drives the movement of the dispensing plunger 12. In turn, as is common in an airless pump, the support plunger 13 will be displaced in an upward direction since the entry of air into the storage enclosure 30 is not allowed. This circumstance, i.e., the driven movement of the actuation plunger 51, the dispensing plunger 12, and the support plunger 13, takes place as long as there is no intake of air into the pressure chamber 40 and as long as the restoring means 60 adopt an operating position.
   In Figure 5, this force of attraction between the actuation plunger 51 and the dispensing plunger 12, which exceeds the elastic force that tends to separate them, is indicated by the speech bubble Fa.
   In a second return phase, illustrated in Figures 6a and 6b, the upward movement of the pressure chamber 40 puts it in communication with the connection 53 with the outside, allowing the entry of air into the pressure chamber 40, with the restoring means 60 adopting a non-operating state and the vacuum effect being broken accordingly. From this moment, the actuation plunger 51 will continue its upward return movement without driving the movement of the dispensing plunger 12, the elastic means 20 being distended, until the actuation plunger 51 reaches the upper displacement stop 51a.
   The system 100' adopts a position similar to that of Figure 2a, with the elastic means 20 under the same or substantially the same predetermined compression state, but with the volume of the storage enclosure 30 having been reduced by a value based on the dose 3a of the product 3 dispensed.
   Figure 6b serves to show the system 100 of Figure 1 moments after the vacuum effect has been broken, in the moment represented by the simplification of Figure 6a.
   In the system 100, the fact that the wall 12a of the pressure plunger 12 is sized in height such that it contacts the upper displacement stop 51a when the actuation plunger 51 is still being pulled by the return spring in an upward direction, with this actuation plunger 51 yet to contact the upper displacement stop 51a, contributes to breaking the vacuum effect. When this occurs, the relative movement between the actuation plunger 51 and the pressure plunger 12 provides the sealing device 41 as shown in the enlarged detail. In this case, the compressible ring 41a is arranged at the level of the non-reduced section of the wall 12a of the pressure plunger 12 and is no longer being flattened, enabling the entry of air into the pressure chamber 40.

Next, the system 101 is described is described in greater detail in order to then explain its operating principle using in this case the sequence of Figures 8a and 9 to 12, which are a graphical simplification of the system 101', conceptually similar to the system 101.

It is particular to the system 101 which is applied to or combines with a dispenser head prepared to produce a mixture of the dispensed product with air, for example, in order to spray same. An example of a dispenser head of this type is described in patent document EP 3738677 B1.

In one embodiment, the body constituting the elastic means 20 is a stainless steel spring. In another embodiment, the body constituting the elastic means is a block made of elastomer, plastic, rubber, or the like. In one embodiment, the elastic means have a constant K= 0.448 N/mm; subjecting the product 3 to a positive pressure of about 0.21 bar above the atmospheric pressure; and the system is sized so that the container can accommodate a volume of the product 3, only by way of example, of between 10 ml and 50 ml.

The system 101 is particularly suitable for dispensing products in medium-viscosity liquid and gel formats.

A head of this type, such as the one disclosed in patent document EP 3738677 B1 or the like, required the accumulation of a volume of air. The system 101 uses this accumulation of air that the head can use to spray a dispensed dose of a product in order to drive the displacement of the dispensing plunger 12 in the downward direction.

The air blown into the system 101 comes from a piston group 80, which determines an aspiration chamber. The piston group 80 mounts an actuation plunger 81 and the restoring means 60 comprise in this case connections 82 and 83 of the chamber of the piston group 80 with the outside and with the pressure chamber 40, respectively.

The air blown into the system will accumulate in an auxiliary chamber 90 of variable volume, located above the dispensing plunger 12. In the example, the auxiliary chamber 90 is formed by the sleeve 2a, the mentioned dispensing plunger 12, and a cover which closes the sleeve 2a on the upper portion thereof. Evidently, other constructive solutions are possible.

In the system 101, the elastic means 20 are configured in the form of a block made of elastomer, plastic, rubber, or the like, that is, made of a material with elastic properties which, if sized accordingly, can be fitted between the bag forming the storage enclosure 30 and the support plunger 13. In this case, the pressure chamber 40 is determined by the free area available between the thrust plunger 12, the support plunger 13, and the sleeve 2a.

A similar configuration is that of the system 101" shown in a simplified manner in Figure 8b. The difference between this system 101" and the system 101 is that in the second case the elastic means 20, either in the form of a block with elastic properties or configured in a different manner, exert pressure on the bag which performs the function of a storage enclosure 30 with the help of a thrust element 14'.

The operation of the system 101 is explained below with the help of the sequence of Figures 8a and 9 to 12 of the system 101'. In the case of the system 101', the alternative according to which, in the absence of the bag, the pressure chamber 40 is determined between the support plunger 13 and a separating plunger 14, referred to briefly above, is taken as an example; and the storage enclosure 30 is determined between the pressure plunger 13 and this separating plunger 14 together with the sleeve of the container.

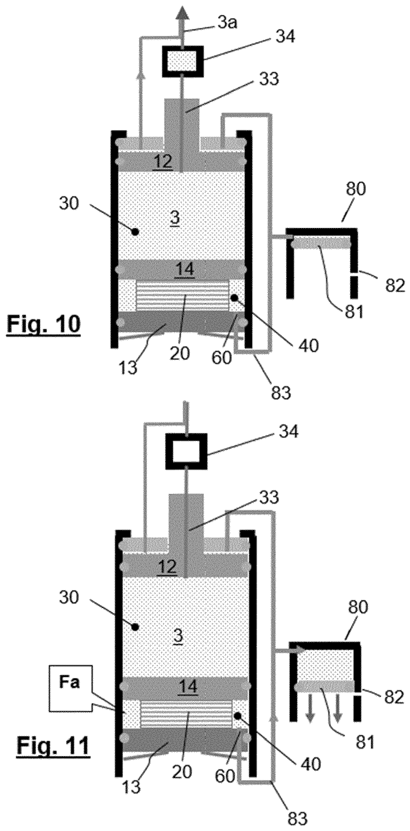

The operation of systems 101; 101'; 101" is as follows:
- With the system 101 adopting the standby position of Figure 7, which is equivalent to the standby position of systems 101' and 101"of Figures 8a and 8b, respectively, the elastic means 20 are in a predetermined compression state, tending to expand the pressure chamber 40. With the downward movement of the support plunger 13 being prevented, the elastic means 20 compress the storage enclosure 30, subjecting the product 3 contained therein to a positive pressure, pressing directly on the bag (see Figure 7) in the system 101; pushing the plunger 14 (see Figure 8a) in the system 101'; or pushing the thrust element 14' (see Figure 8b) in the system 101".
- To dispense a dose 3a of a product 3, the dispensing plunger 12 is displaced in a downward direction, as illustrated in Figure 9, with the actuation plunger 81 being actuated to that end.
   It is particular to systems 101; 101'; 101" that this displacement of the dispensing plunger 12 in a downward direction occurs by blowing a volume of air into the auxiliary chamber 90. Optionally, part of the air displaced by the actuation plunger 81 can reach the pressure chamber 40. Since the effective surface of the dispensing plunger 12 in the auxiliary chamber 90 is larger than the effective surface of the separating plunger 14 in the pressure chamber 40, with identical pressure conditions being reached in the mentioned auxiliary chamber and pressure chamber 90 and 40, both the dispensing plunger 12 and the separating plunger 14 would be displaced towards the support plunger 13.
   The communication between the chamber of the piston group 80 and the pressure chamber 40 is implemented in the examples by means of the fluid connection 83.
   In any case, as illustrated in Figure 9, the displacement of the dispensing plunger 12 in a downward direction and/or the load to which the elastic means 20 are subjected causes an increase in the pressure of the product 3 contained in the storage enclosure 30, opening the valve element 32 when the pressure of the product 3 exceeds the dispensing pressure Pd.
   It should be indicated that, in these examples, when air is blown as a result of the actuation plunger 81 in the piston group 80, the position of said actuation plunger 81 disables the connection with the outside through the air connection 82. From this moment, the restoring means 60 adopt an operating state.
   As illustrated in Figure 10, the opening of the valve element 32 causes the exit of a dose 3a of a product contained in the storage enclosure 30 until the pressure of the product 3 no longer exceed the dispensing pressure Pd. In the example, this circumstance can occur when pressure is no longer exerted on the actuation plunger 81 and when the latter reaches the end of stroke and/or when the elastic means 20 are distended to such an extent that they no longer exert sufficient thrust on the product 3 through the separating plunger 14 in the system 101'.
- In systems 101; 101'; 101 ", the dose 3a of the product 3 leaves the storage enclosure 30 to reach a mixing chamber 34 in which it can be mixed with air from the auxiliary chamber 90. Naturally, this mixing chamber is optional.
- The return of the actuation plunger 81 of the piston group 80 will then take place. To that end, it is contemplated that the latter is biased by auxiliary elastic means, not depicted, which tend to arrange same in the original position, by default the one of Figures 7, 8a, and 8b. With the restoring means 60 adopting an operating position, this displacement produces a suction effect on the air contained in the pressure chamber 40 which translates into a upward movement of the support plunger 13 since there is no intake of air into the storage enclosure 30 nor into the auxiliary chamber 90, compressing and restoring the compression of the elastic means 20, all of which is as illustrated in Figure 11.
   In Figure 11, this force of attraction between the support plunger 13 and the separating plunger 14, which exceeds the elastic force that tends to separate them, is indicated by the speech bubble Fa.
- When the actuation plunger 81 reaches its starting position, illustrated in Figures 7, 8a, and 8b, it can again intake air into the piston group 80 as it again enables the connection of air with the outside through the air connection 82. However, the downward movement of the support plunger 13 is prevented, so this intake of air will not cause the distension of the elastic means 20 that will be kept compressed: in the system 101', between the support plunger 13 and the separating plunger 14, transmitter of the thrust that these elastic means 20 exert again on the product 3 contained in the storage enclosure 30; and in systems 101 and 101", between the support plunger 13 and the bag performing the function of a storage enclosure 30, the elastic means 20 adopting for all the cases the same or substantially the same initial predetermined compression state, but with the volume of the storage enclosure 30 having been reduced by a value based on the dose 3a of the product 3 dispensed.

## Claims

1. A method for dispensing a dose (3b) of a liquid or pasty product (3) which occupies a storage enclosure (30) of variable volume in a container (2) and is subjected to a pressure greater than atmospheric pressure as a result of elastic means (20) which, when elastically loaded, tend to compress the mentioned storage enclosure (30), the method being **characterized in that** it comprises the step of restoring the load of the elastic means (20), compensating for or preventing a distension thereof caused by the dispensing of a dose (3a) of the product (3) extracted from the storage enclosure (30), by means of the temporary establishment of pressure conditions Pv lower than atmospheric pressure in a pressure chamber (40) which is a chamber of variable volume linked to, or under the influence of, the elastic means (20).

2. The method according to claim 1, **characterized in that** it comprises establishing pressure conditions Pv lower than atmospheric pressure
- that are sufficient to prevent the pressure chamber (40) from being able to expand, even when the elastic means (20) tend to expand it; or
- that are sufficient to shrink the pressure chamber (40), even when the elastic means (20) tend to expand it.

3. The method according to claim 1 or 2, **characterized in that** the dispensing of a dose (3a) of the product (3) comprises acting externally on an actuator (50) which is a mobile component of a dispensing system and displacing it in a first direction from a standby position to a position which causes the compression of the storage enclosure (30);
and the displacement of the same mobile component in a second direction back to its standby position;
and **in that** the displacement of this mobile component in the first or the second directions automatically triggers the step of restoring the load of the elastic means (20).

4. A system (100, 100', 101, 101', 101") for dispensing a dose (3a) of a liquid or pasty product (3) which occupies a storage enclosure (30) of variable volume in a container (2) and is subjected to a pressure greater than atmospheric pressure, the system comprising to that end elastic means (20) which, when elastically loaded, tend to compress the mentioned storage enclosure (30), the system being **characterized in that** it comprises restoring means (60) for restoring the load of the elastic means in order to compensate for or prevent a distension thereof caused by the dispensing of a dose (3a) of the product (3) extracted from the storage enclosure (30), these restoring means being configured for the temporary establishment of pressure conditions Pv lower than atmospheric pressure in a pressure chamber (40) which is a chamber of variable volume linked to, or under the influence of, the elastic means (20).

5. The system (100, 100', 101, 101', 101") according to claim 4, **characterized in that** the elastic means (20) are loaded in compression.

6. The system (100, 100', 101, 101', 101") according to claim 5, **characterized in that** the restoring means (60) are prepared to enable establishing pressure conditions Pv lower than atmospheric pressure
- that are sufficient to prevent the pressure chamber (40) from being able to expand, even when the elastic means (20) tend to expand it; or
- that are sufficient to shrink the pressure chamber (40), even when the elastic means (20) tend to expand it.

7. The system (100, 100', 101, 101', 101") according to any one of claims 4 to 6, **characterized in that** the restoring means (60) comprise one or a plurality of connection paths (41, 42, 43, 83) with the pressure chamber (40) for the intake of air into the inside thereof and for the extraction of air from the inside thereof, being able to adopt at least
- an operating state, in which they enable the extraction of air but prevent the intake of air or prevent both the intake and the extraction of air; and
- a non-operating state, in which they enable the intake of air.

8. The system (100, 100', 101, 101', 101") according to claim 7, **characterized in that** it comprises an actuator (50) with a mobile component displaceable by external actuation in a first direction from a standby position to a position which causes the compression of the storage enclosure (30); and displaceable in a second direction back to the standby position thereof;
and **in that** the displacement of this mobile component in the first direction or the second direction automatically triggers the adoption of an operating state of the restoring means (60).

9. The system (100, 100', 101, 101', 101") according to any one of claims 4 to 8, **characterized in that** it comprises a dispensing path (33) prepared for communicating the product (3) contained in the storage enclosure (30) with the outside by means of a normally closed valve group or element (32), said valve group or element (32) being configured to adopt an open state, which allows fluid to circulate through the dispensing path (33), by mechanical actuation or when the pressure of the product (3) in the storage enclosure (30) exceeds a dispensing pressure Pd.

10. The system (100, 100') according to claim 9, **characterized in that** the container (2) is compartmentalized by several plungers, there being
- an actuation plunger (51) which can be actuated by a user,
- a support plunger (13), with atmospheric pressure acting on one of the sides thereof, and
- a dispensing plunger (12), arranged between the actuation plunger (51) and the support plunger (13),
wherein
- the support plunger (13) is displaceable only in the direction for approaching the dispensing plunger (12),
- the volume of the pressure chamber (40) is determined by the separation between the actuation plunger (51) and the dispensing plunger (12) and the elastic means (20) are loaded, in a compression state, between these actuation plunger (51) and dispensing plunger (12), tending to separate them and expand the pressure chamber (40), and
- the volume of the storage enclosure (30) is determined by the separation between the dispensing plunger (12) and the support plunger (13), the product (3) being able to be contained directly between these dispensing plunger (12) and support plunger (13) or in a flexible container housed between these dispensing plunger (12) and support plunger (13),
the valve group or element (32) temporarily adopting its open state when, starting from a standby state of the system, as a result of a driven movement of the dispensing plunger (12) to the storage enclosure (30) caused by an actuated displacement of the actuation plunger (51) to the mentioned storage enclosure (30), the restoring means (60) adopt an operating state after shrinkage of the pressure chamber (40) and overcompression of the elastic means (20), all this such that
- when the volume of the storage enclosure (30) decreases upon extracting a dose (3a) of the product (3) therefrom; and/or
- when a return displacement of the actuation plunger (51) occurs in the opposite direction with respect to the storage enclosure (30) and during a part of the return stroke thereof,
the adoption of the operating state of the restoring means (60) causes, as a result of vacuum, the driven movement of the dispensing plunger (12) preventing the pressure chamber (40) from being able to expand and the elastic means (20) from being able to distend, forcing the displacement of the support plunger (13) in order to compensate for the extracted volume of the dose (3a) of the product (3) until the restoring means (60) adopt their non-operating state, allowing the expansion of the pressure chamber (40) returning the elastic means (20) substantially to their original compression state.

11. The system (100, 100') according to claim 10, **characterized in that** the actuation plunger (51) is biased by auxiliary elastic means (52) which tend to arrange it against a displacement stop (51a) in an opposite direction with respect to the storage enclosure (30).

12. The system (100) according to claim 10 or 11, **characterized in that** the restoring means (60) comprise a plurality of connection paths with the pressure chamber (40), including a path with a check valve (42) through the actuation plunger (51) and a sealing device (41) prepared to enable or prevent the passage of air as a function of the relative position between the dispensing plunger (12) and the actuation plunger (51).

13. The system (100) according to any one of claims 10 to 12, **characterized in that** the dispensing plunger (12) is provided along its perimeter with a wall (12a) which determines a sleeve on which the actuation plunger (51) rests and slides.

14. The system (100') according to claim 10 or 11, **characterized in that** the restoring means (60) comprise a connection path (43) for connecting the pressure chamber (40) with the outside located between the pressure plunger (13) and the actuation plunger (51) the system being in its standby state.

15. The system (101") according to claim 9, **characterized in that** the container (2) is compartmentalized by several plungers, there being
- a support plunger (13), with atmospheric pressure acting on one of the sides thereof, and
- a dispensing plunger (12),
there being an auxiliary chamber (90) of variable volume, located on the side of the dispensing plunger (12) opposite to the side in which the support plunger (13) is located, connected to a piston group (80) with a corresponding actuation plunger (81),
wherein
- the support plunger (13) is displaceable only in the direction for approaching the dispensing plunger (12),
- the volume of the pressure chamber (40) is determined by the separation between the dispensing plunger (12) and the support plunger (13) and the elastic means (20) are loaded, in a compression state, between one of the dispensing plunger (12) or support plunger (13) and the storage enclosure (30) consisting of a flexible container located inside the pressure chamber (40), the valve group or element (32) temporarily adopting its open state when, starting from a standby state of the system, as a result of a driven movement of the dispensing plunger (12) to the storage enclosure (30) caused by the hydraulic thrust brought about by an actuated displacement of the actuation plunger (81), the restoring means (60) adopt an operating state, causing a distension of the elastic means (20) to compensate for the volume of the dose (3a) of the product (3) extracted from the storage enclosure (30), all this such that
- when a return displacement of the actuation plunger (81) occurs in the direction opposite that which caused the displacement of the dispensing plunger (12) to the storage enclosure (30) and during a part of its return stroke,
the adoption of the operating state of the restoring means (60) causes as a result of suction the displacement of the support plunger (13) and the compression of the elastic means (20), returning the elastic means (20) substantially to their original compression state.

16. The system (101, 101') according to claim 9, **characterized in that** the container (2) is compartmentalized by several plungers, there being
- a support plunger (13), with atmospheric pressure acting on one of the sides thereof,
- a dispensing plunger (12), and
- a separating plunger (14) located between the support plunger (13) and the dispensing plunger (12),
there being an auxiliary chamber (90) of variable volume, located on the side of the dispensing plunger (12) opposite to the side in which the support plunger (13) is located, connected to a piston group (80) with a corresponding actuation plunger (81),
wherein
- the support plunger (13) is displaceable only in the direction for approaching the dispensing plunger (12),
- the volume of the pressure chamber (40) is determined by the separation between the support plunger (13) and the separating plunger (14) and the elastic means (20) are loaded, in a compression state, between these support plunger (13) and separating plunger (14), tending to separate them and expand the pressure chamber (40),
- the volume of the storage enclosure (30) is determined by the separation between the dispensing plunger (12) and the separating plunger (14), the product (3) being able to be contained directly between these dispensing plunger (12) and separating plunger (14) or in a flexible container housed between these dispensing plunger (12) and separating plunger (14),
the valve group or element (32) temporarily adopting its open state when, starting from a standby state of the system, as a result of a driven movement of the dispensing plunger (12) to the storage enclosure (30) caused by the hydraulic thrust brought about by an actuated displacement of the actuation plunger (81), the restoring means (60) adopt an operating state, causing a distension of the elastic means (20) to compensate for the volume of the dose (3a) of the product (3) extracted from the storage enclosure (30), all this such that
- when a return displacement of the actuation plunger (81) occurs in the direction opposite that which caused the displacement of the dispensing plunger (12) to the storage enclosure (30) and during a part of its return stroke,
the adoption of the operating state of the restoring means (60) causes as a result of suction the displacement of the support plunger (13) and the compression of the elastic means (20), returning the elastic means (20) substantially to their original compression state.

17. The system (100, 100') according to any one of claims 4 to 16, **characterized in that** it is devoid of any aspiration chamber which temporarily houses a dose of the product (3) extracted from the storage enclosure (30) prior to the dispensing thereof.
